# EUROPEAN PATENT SPECIFICATION

(11) **EP 0 464 059 B1**
(45) Date of publication and mention of the grant of the patent: **22.02.1995**
(21) Application number: 90904645.0
(22) Date of filing: 14.03.1990
(51) Int. Cl.: D21C 5/02

(54) **METHOD OF DE-INKING WASTE PAPER MATERIALS**
VERFAHREN ZUM DE-INKEN VON ALTPAPIEREN
PROCEDE PERMETTANT D'ENLEVER L'ENCRE DE MATERIAUX A BASE DE VIEUX PAPIERS

(30) Priority: 15.03.1989 GB 8905942
(43) Date of publication of application: 08.01.1992
(73) Proprietor: WOODFREE LIMITED, Essex CM2 6JB (GB)
(72) Inventor: BLUM, Stanley, London W11 (GB)
(74) Representative: Cross, Rupert Edward Blount
(86) International application number: PCT/GB90/00385
(87) International publication number: WO 90/10749

(56) References cited:
- EP-A- 0 092 124
- EP-A- 0 174 825
- FR-A- 962 255
- FR-A- 2 281 456
- SE-A- 8 701 471
- SE-B- 456 253
- US-A- 1 925 372
- US-A- 2 525 594
- TAPPI 1986 Papermaking Chemical Processing Conference, T.W. Woodward "Chemicals used in the Deinking of Secondary Fiber" pages 281-288.
- Pulp & Paper, November 1986, T.W. Woodward "Appropriate Chemical Additives are Key to Improved Deinking Operations" pages 59-63.
- TAPPI 1991 Chemical Processing Aids Short Course, T.W. Woodward "Deinking Chemistry" pages 85-105

## Description

This invention relates to a method of de-inking waste paper materials.

In the paper and board industry, the use of secondary fibres derived from recycling waste paper materials is well-known, and the dispersal and separation of ink particles from waste paper materials and its secondary fibres is a necessary step in the recycling of the material, particularly in the production of paper for newsprint, tissues, and fine paper.

In known re-cycling processes, the waste paper or "furnish" is usually placed in a hydrapulper where it is mixed with water and the following chemicals:
(1) caustic soda or other de-inking chemical,
(2) sodium metasilicate as a buffering agent, and
(3) hydrogen peroxide or other bleaching agent.

In the hydrapulper, the "furnish" is disintegrated into a fibrous pulp, which is then de-inked and bleached by the added chemicals. From the hydrapulper the fibrous pulp or slushed fibres, with a consistency of 15% (as in high consistency pulping) or 5-6% (as in Mills not using high consistency pulping), is dumped into a series of "dump" or storage chests where the slushed fibres are diluted down to a consistency of around 1.5%

The "stock" or diluted slushed fibres then pass to the de-inking equipment, which either consists of flotation cells or washing screens or a combination of these, where the dispersed ink particles are removed from the slushed fibres.

In the method of utilising flotation cells, a "collector" soap is added to the "stock" prior to entering the de-inking cell to agglomerate the dispersed ink-particles which then float to the surface of the cell on air-bubbles which are sourced at the base of the flotation cell and which are then skimmed off.

In the washing method of de-inking the dispersed ink particles are washed out of the system by passing the stock onto a rotary decker, a sidemill screen, a screw press, or similar requirement, using large volumes of water.

These known methods of de-inking thus require the addition of a number of different de-inking chemicals. Some chemicals are also only effective for one of the two different methods, i.e. flotation and washing methods, and cannot be used in the other method. Furthermore, caustic soda, which is most commonly used in relatively large amounts as a de-inking chemical, can attack the fibres and may not be regarded as being environmentally safe when emptied from the mill into external water sources.

EP-A-0092124 discloses a waste paper recycling process in which a de-inking agent such as Removink L 8001 is added to a fibrous suspension of the waste paper together with a mixture of chemicals selected from the group consisting of sodium hydroxide, calcium hydroxide, magnesium hydroxide, sodium carbonate, sodium phosphate, sodium tripolyphosphate, sodium pyrophosphate, and sodium silicate in order to provide alkalinity of the fibrous suspension.

FR-A-2281456 discloses a process for removing ink from waste paper in which the ink is separated from the waste paper primarily by gas bubbles. The ink separation can be improved by use of an alkaline agent such as sodium silicate, sodium metasilicate, sodium hydroxide, potassium hydroxide, sodium carbonate and/or a tensio-active agent.

US-A-2525594 discloses a process for removing ink from waste paper in which the waste paper is pulped and the pulp contacted with an aqueous alkaline solution containing a peroxygen compound at an elevated temperature. Preferably the alkaline solution includes potassium or sodium hydroxide, but it can also use soda ash or other alkali metal carbonate, calcium hydroxide or a sodium phosphate or silicate or borate.

It is therefore an object of the present invention to provide a method of de-inking waste paper materials which substantially removes the above-mentioned problems associated with known methods.

Accordingly, the present invention consists in a method of de-inking waste paper materials comprising the steps of:-
pulping the paper material to form a fibrous stock of a slush-like consistency;
dispersing ink particles from the fibrous stock by the addition of an ink dispersant composition;
and removing the dispersed ink particles from the fibrous stock;
characterized in that the ink dispersant composition consists solely of a mixture of phosphated and carbonated sodium salts or of a mixture of phosphated and carbonated sodium salts including small amounts of metasilicates and/or caustic soda.

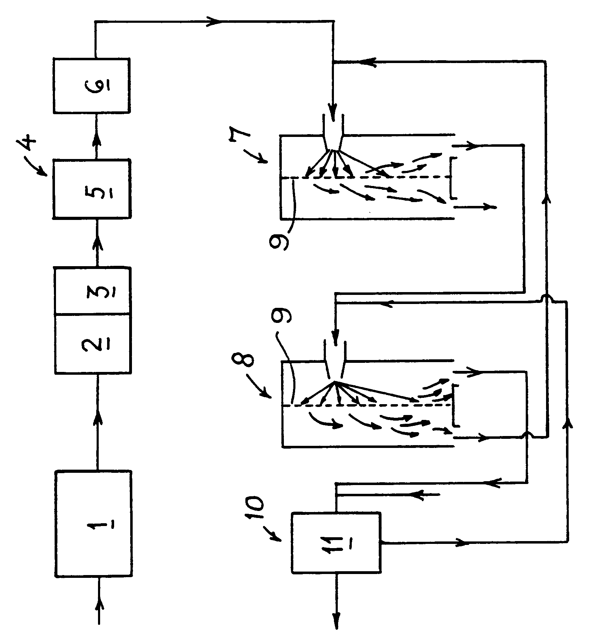

The invention will now be further described by way of example with reference to the accompanying drawing, which illustrates schematically one embodiment of the present invention.

Referring now to the drawing, there is shown a flow diagram of a washing method of de-inking, the steps of which are well-known to those skilled in the art, except for the replacement of known de-inking substances by the substance as used in accordance with the present invention.

In the illustrated method, waste is fed into a hydropulper 1, in which it is disintegrated into a fibrous pulp or fibrous stock of a slushed consistency. Water is added to the stock, together with a substance to disperse ink particles from the stock. From there, the stock and dispersed ink particles pass into a centrifugal cleaner 2 to remove grit, pins, clips, etc, and through a screen 3 to remove oversized particles.

The stock then passes to a first washing stage 4 consisting of a thickener 5 and a fine deflaker or disperser 6, which produces a well defibered stock, which is reasonably clean and free from ink specks but still contains very small ink particles. From there, the stock passes to second and third washing stages, 7 and 8 respectively, each including a vertical screen 9 and in which dilution water is added to the stock. A fourth washing stage 10 consists of another thickener 11, and the clean stock is then passed from the thickener 11 to refiners and paper-making machinery.

In accordance with an embodiment of the present invention, the substance added to disperse the ink particles consists of a mixture of 1 to 75% weight in weight of sodium carbonate and 25 to 99% weight in weight of sodium phosphate, with a typical composition being 8% weight in weight of sodium carbonate and 92% weight in weight of sodium phosphate.

The substance may also include small quantities of metasilicates (for example 1 to2% weight in weight) and/or caustic soda (for example 0.5 to 2% weight in weight).

As an alternative to the above-described washing method of de-inking, the substance may be utilised to disperse ink particles in known flotation methods.

The use of this substance in de-inking methods has advantages over the use of the chemicals generally used as follows:-
(1) It is an effective ink dispersant in both traditional methods of de-inking (i.e. Flotation and Washing), unlike other de-inking products which are only effective in one or other of the traditional methods but not both.
(2) By virtue of its formulation, it can be used as a "one-shot" ink dispersant in the hydrapulper, without the need for the addition of buffering agent or any other chemical in the hydrapulper.
(3) It is effective as an ink dispersant at low temperatures (eg. 9°C), and therefore saves the power required to heat the hydrapulper contents to 50°-60°C, as is necessary in known methods using other de-inking chemicals.
(4) Unlike caustic soda, it does not attack the fibres, and therefore gives a stronger paper end product, and may be used as a caustic soda replacement in the hydrapulper.
(5) As an ink dispersant, it does not necessarily require a collector soap in Flotation de-inking, nor the high temperature (60°C) necessary when a collector soap is used, this giving further economies in use.
(6) It is safer to the environment, i.e. it is much less toxic to aquatic wildlife, and has lower and more acceptable Biological Oxygen Demand (B.O.D.) and Chemical Oxygen Demand (C.O.D.) when emptied from the mill into external water sources than other de-inking products at the present time e.g. caustic soda or bleach.
(7) In mill trials, it has been found to have excellent "former" properties in that it gives a uniform distribution of fibres in the finished paper which results in a better quality end product.

Furthermore, mill machine runs and further experimental procedures utilising this substance in de-inking methods have revealed the following additional advantages:-
(a) striking increases in the strength of the recycled products of between 5 to 30%, depending on the waste mix in the furnish used;
(b) production of a better, less speckled product when used to de-ink better grade, office-type waste paper, hitherto known as "difficult to de-ink" grade (i.e. wood-free waste);
(c) successful attacks on laser print, xero-graphic print, hitherto known as "difficult to remove" inks, and on the new FLOXO inks, as well as producing a higher brightness than standard de-inking products; and
(d) enabling up to 85% of "stickies" or gums to be passed out, thus removing the bulk of a major problem of the paper recycling industry, which can account for expensive "down-time" of the machines.

## Claims

1. A method of de-inking waste paper materials comprising the steps of:-
pulping the paper material to form a fibrous stock of a slush-like consistency;
dispersing ink particles from the fibrous stock by the addition of an ink dispersant composition;
and removing the dispersed ink particles from the fibrous stock;
characterized in that the ink dispersant composition consists solely of a mixture of phosphated and carbonated sodium salts or of a mixture of phosphated and carbonated sodium salts including small amounts of metasilicates and/or caustic soda.

2. A method as claimed in claim 1, wherein said ink dispersant composition is used to disperse ink particles at low temperatures, e.g. 9°C.

3. A method as claimed in claim 1 or 2, wherein said ink dispersant composition is used as a "one-shot" composition in a hydropulper containing said fibrous stock without addition to the hydropulper of a buffering agent or any other chemical apart from the ink dispersant composition.

4. A method as claimed in claim 1, 2 or 3, wherein said mixture of phosphated and carbonated sodium salts is the sole component of said ink dispersant composition which consists of approximately 8% weight in weight of sodium carbonate and approximately 92% weight in weight of sodium phosphate.

5. A method as claimed in any one of claims 1 to 3, wherein the amount of metasilicates used is approximately 1 to 2% weight in weight.

6. A method as claimed in any one of claims 1 to 3 and 5, wherein the amount of caustic soda used is approximately 0.5% to 2% weight in weight.

## Patentansprüche

1. Verfahren zum De-Inken von Altpapieren, das folgende Schritte umfaßt:
- Zermahlen des Altpapiers, um einen faserigen Bestand mit matschiger Konsistenz zu erhalten,
- Austreiben der Tintebestandteile aus dem faserigen Bestand durch Zugabe einer die Tintebestandteile austreibenden Mischung
- Entfernen der Tintebestandteile aus dem faserigen Bestand,
**dadurch gekennzeichnet**, daß die die Tintebestandteile austreibende Mischung eine Mischung nur aus Phosphatsalzen und kohlensauren Natronsalzen oder eine Mischung aus Phospatsalzen und kohlensauren Natronsalzen mit geringen Mengen von Metasilikaten und/oder Natronlauge ist.

2. Verfahren nach Anspruch 1, **dadurch gekennzeichnet**, daß die die Tintebestandteile austreibende Mischung bei niedrigen Temperaturen, insbesondere bei 9° C, verwendet wird.

3. Verfahren nach einem der Ansprüche 1 - 2, **dadurch gekennzeichnet**, daß die die Tintebestandteile austreibende Mischung als Einmal-Zugabe-Mischung in einer Hydroknetmaschine verwendet wird, die den faserigen Bestand enthält, ohne daß der Hydroknetmaschine ein Pufferzusatz oder eine andere Chemikalie außer der die Tintebestandteile austreibenden Mischung zugegeben werden.

4. Verfahren nach einem der Ansprüche 1 - 3, **dadurch gekennzeichnet**, daß diese Mischung aus Phospatsalzen und kohlensauren Natronsalzen der einzige Bestandteil der die Tintebestandteile austreibenden Mischung ist, die etwa 8 Gewichtsprozent Natriumkarbonat und etwa 92 Gewichtsprozent phosphorsaures Natron enthält.

5. Verfahren nach einem der Ansprüche 1 - 3, **dadurch gekennzeichnet**, daß die Menge der verwendeten Metasilikate etwa im Bereich von 1 - 2 Gewichtsprozent liegt.

6. Verfahren nach einem der Ansprüche 1 - 3, **dadurch gekennzeichnet**, daß die Menge der verwendeten Natronlauge etwa im Bereich von 0,5 - 2 Gewichtsprozent liegt.

## Revendications

1. Procédé permettant d'enlever- l'encre de matériau à base de vieux papiers comprenant les étapes de
- pulper le matériau à base de papier pour former une pâte de papier fibreuse d'une consistance semblable à la boue ;
- disperser les particules d'encres de la pâte de papier fibreuse par l'addition d'une composition dispersante d'encre ;
- et enlever les particules d'encre dispersées de la pâte de papier fibreuse ;
caractérisé en ce que la composition dispersante d'encre consiste uniquement en un mélange de sels de sodium phosphatés et carbonés ou d'un mélange de sels de sodium phosphatés et carbonés incluant des petites quantités de métasilicates et/ou de soude caustique.

2. Procédé selon la revendication 1 dans lequel ladite composition dispersante d'encre est utilisée pour disperser de particules d'encre à des températures basses, par exemple 9°C.

3. Procédé selon la revendication 1 ou la revendication 2, dans lequel ladite composition dispersante d'encre est utilisée comme une composition "un coup" dans un hydropulpeur contenant ladite pâte de papier fibreuse sans ajouter à l'hydropulpeur un agent de tamponnement ou tout autre produit chimique en dehors de la composition dispersante d'encre.

4. Procédé selon la revendication 1, 2 ou 3, dans lequel ledit mélange de sels de sodium phosphatés et carbonés est le seul composant de ladite composition dispersante d'encre qui est constituée d'environ 8% en poids de carbonate de sodium et d'environ 92% en poids de phosphate de sodium.

5. Procédé selon l'une quelconque des revendications 1 à 3, dans lequel la quantité de métasilicates utilisée est environ 1 à 2 % en poids.

6. Procédé selon l'une quelconque des revendications 1 à 3 et 5, dans lequel la quantité de soude caustique utilisée est environ 0,5 à 2% en poids.
